# EUROPEAN PATENT APPLICATION

(11) **EP 4 322 099 A1**
(43) Date of publication of application: **14.02.2024**
(21) Application number: 23187358.9
(22) Date of filing: 24.07.2023
(51) Int. Cl.: G06Q 50/08, G08B 25/10

(54) **MONITORING CONSTRUCTION SITE ACTIVITY AND ENVIRONMENTAL CONDITION INFORMATION**

(30) Priority: 29.07.2022 GB 202211116
(71) Applicant: Ftsquared Developments Ltd, Wetherby Yorkshire LS22 5DZ (GB)
(72) Inventor: JOSEPH, Michael, Wetherby, LS22 5DZ (GB); HAYES, Liam, Wetherby, LS22 5DZ (GB)
(74) Representative: Swindell & Pearson Limited

(57) **Abstract**

An apparatus (400) comprising means for: obtaining (302) construction site activity information via a network of distributed on-site activity sensors (102); obtaining (304) environmental condition information from an environmental condition information source; determining (306) whether a site restriction alerting condition is satisfied, in dependence on the construction site activity information and on an environmental condition an indicated by the environmental condition information; and outputting (308) an alert in dependence on satisfaction of the site restriction alerting condition.

## Description

### TECHNOLOGICAL FIELD

Embodiments of the present disclosure relate to an apparatus, a method, and computer software, for monitoring construction site activity and environmental condition information.

### BACKGROUND

Construction sites are hazardous environments. In order to ensure that proper working procedures are followed, various processes and policies are implemented such as requirements to use personal protective equipment, requirements to work in groups, and requirements to tag equipment, among other things. It is traditionally the role of site supervisors to enforce compliance with these processes. However, site supervisors cannot monitor all parts of the site at all times.

Technological solutions for automatically monitoring site activity and compliance with processes are advantageous. Closed circuit television systems enable manual remote monitoring. Automatic remote monitoring solutions are available, such as machine vision systems for monitoring whether staff are wearing hardhats.

### BRIEF SUMMARY

According to various, but not necessarily all examples of the present disclosure there is provided an apparatus comprising means for:
obtaining construction site activity information via a network of distributed on-site activity sensors;
obtaining environmental condition information from an environmental condition information source;
determining whether a site restriction alerting condition is satisfied, in dependence on the construction site activity information and on an environmental condition an indicated by the environmental condition information; and
outputting an alert in dependence on satisfaction of the site restriction alerting condition.

Optionally, the construction site activity information is based on a number of unique wireless communication probes detected to be in proximity to each on-site activity sensor, and wherein each on-site activity sensor is associated with a different construction site area.

Optionally, detecting the number of unique wireless communication probes in proximity to each on-site activity sensor is based on sensing of unique wireless local area network (WLAN) signal emissions by each on-site activity sensor.

Optionally, detecting the number of unique wireless communication probes in proximity to each on-site activity sensor is based on sensing of unique wireless personal area network (WPAN) signal emissions by each on-site activity sensor.

Optionally, at least one of the on-site activity sensors is configured to provide a directional receiving pattern.

Optionally, obtaining the construction site activity information comprises looking up, from stored data, a type of construction site activity based on an identifier of a first one of the on-site activity sensors, wherein the stored data associates identifiers of the on-site activity sensors with different types of construction site activities.

Optionally, obtaining the construction site activity information comprises detecting a type of construction site activity via one or more image sensors.

Optionally, the type of construction site activity comprises one or more of: activity in or around a construction crane; working at height; outdoor working; or activity in or around a concrete pour area.

Optionally, the environmental condition information is indicative of at least one of: a rain condition; a wind condition; a snow condition; an ice condition; or a temperature condition.

Optionally, the environmental condition information source comprises an environmental condition server, and wherein the environmental condition information indicates a local environmental condition an in a vicinity of the network of on-site activity sensors.

Optionally, the environmental condition information source comprises a local environmental condition sensor with which the apparatus is configured to communicate.

Optionally, determining whether the site restriction alerting condition is satisfied comprises determining whether a number of individuals detected by a first on-site activity sensor of the network of on-site activity sensors exceeds a maximum count, wherein the maximum count depends on an identity of the first on-site activity sensor and on the environmental condition.

Optionally, the maximum count is zero in dependence on the identity of the first on-site activity sensor and on the environmental condition information indicating a predetermined adverse environmental condition.

Optionally, the apparatus comprises means for determining the maximum count based on a site restriction configuration, wherein the site restriction configuration is configured to enforce environmental condition-dependent maximum counts in dependence on one or more of the following adverse environmental condition conditions:
an above-threshold wind condition if the construction site activity information is associated with construction crane working and/or working at height and/or outdoor working;
an above-threshold rain condition if the construction site activity information is associated with concrete pouring and/or working at height and/or outdoor working;
an above-threshold ice condition if the construction site activity information is associated with working at height and/or outdoor working;
an above-threshold temperature condition if the construction site activity information is associated with outdoor working and/or concrete pouring; or
a below-threshold temperature condition if the construction site activity information is associated with outdoor working and/or concrete pouring.

Optionally, the site restriction configuration is configured to enforce environmental condition-dependent maximum counts in dependence on a construction crane characteristic, wherein the construction crane characteristic comprises a crane type and/or a crane height.

Optionally, determining whether the site restriction alerting condition is satisfied comprises determining whether a number of individuals detected by one of the on-site activity sensors is below a minimum count which depends on the on-site activity sensors and the environmental condition information.

Optionally, the minimum count is a value of two or more when the environmental condition information indicates a predetermined adverse environmental condition.

Optionally, outputting the alert comprises one or more of the following:
causing, at least in part, rendering of the alert on an output device;
sending an alert notification, addressed to a destination address, to a communication interface; or
recording the alert with a timestamp in a memory.

Optionally, the apparatus is configured to repeat the alert according to an alert repetition time period, based on the satisfaction of the site restriction alerting condition.

Optionally, the apparatus is configured to output an end-of-alert signal to indicate when the site restriction alerting condition is no longer satisfied.

According to various, but not necessarily all examples of the present disclosure there is provided a construction site comprising the apparatus as claimed in any preceding claim, and the network of on-site activity sensors.

Optionally, the on-site activity sensors comprise one or more of the following:
an on-site activity sensor positioned to detect occupancy of a construction crane;
an on-site activity sensor positioned to detect occupancy within a concrete pour area;
an on-site activity sensor positioned to detect occupancy at an elevated work area; or
an on-site activity sensor positioned to detect occupancy at an outdoor work area.

Optionally, the on-site activity sensors have signal detection ranges associated therewith, wherein the on-site activity sensors are distributed at a spacing such that the signal detection ranges substantially do not overlap, or wherein the signal detection ranges overlap and the on-site activity sensors comprise range detection means.

According to various, but not necessarily all examples of the present disclosure there is provided a method comprising:
obtaining construction site activity information via a network of distributed on-site activity sensors;
obtaining environmental condition information from an environmental condition information source;
determining whether a site restriction alerting condition is satisfied, in dependence on the construction site activity information and on an environmental condition an indicated by the environmental condition information; and
outputting an alert in dependence on satisfaction of the site restriction alerting condition.

According to various, but not necessarily all examples of the present disclosure there is provided computer software that, when executed by at least one processor, is configured to:
cause obtaining construction site activity information via a network of distributed on-site activity sensors;
cause obtaining environmental condition information from an environmental condition information source;
cause determining whether a site restriction alerting condition is satisfied, in dependence on the construction site activity information and on an environmental condition an indicated by the environmental condition information; and
cause outputting an alert in dependence on satisfaction of the site restriction alerting condition.

According to various, but not necessarily all examples of the present disclosure there is provided a method comprising:
obtaining construction site activity information via a network of distributed on-site activity sensors;
determining whether a site restriction alerting condition is satisfied, in dependence on the construction site activity information; and
outputting an alert in dependence on satisfaction of the site restriction alerting condition.

According to various, but not necessarily all examples of the present disclosure there is provided an apparatus comprising means for performing the method. According to various, but not necessarily all examples of the present disclosure there is provided computer software that, when executed by at least one processor, is configured to cause the method to be performed.

According to various, but not necessarily all examples of the present disclosure there is provided an apparatus comprising:
a data aggregation module configured to obtain construction site activity information, via a wireless gateway, from a network of distributed on-site activity sensors, wherein the construction site activity information is based on a number of unique wireless communication probes detected to be in proximity to each on-site activity sensor, and wherein each on-site activity sensor is associated with a different construction site area, wherein detecting the number of unique wireless communication probes in proximity to each on-site activity sensor is based on sensing of unique wireless local area network (WLAN) and/or wireless personal area network (WPAN) signal emissions by each on-site activity sensor; and
a sensed data store configured to store the construction site activity information.

According to various, but not necessarily all examples of the present disclosure there is provided a construction site comprising a network of distributed on-site activity sensors for detecting construction site activity information, wherein the construction site activity information is based on a number of unique wireless communication probes detected to be in proximity to each on-site activity sensor, and wherein each on-site activity sensor is associated with a different construction site area, wherein detecting the number of unique wireless communication probes in proximity to each on-site activity sensor is based on sensing of unique wireless local area network (WLAN) and/or wireless personal area network (WPAN) signal emissions by each on-site activity sensor.

### BRIEF DESCRIPTION

Some examples will now be described with reference to the accompanying drawings in which:
FIG. 1 illustrates an example of a system;
FIG. 2 illustrates an example of a construction site;
FIG. 3 illustrates an example of a method;
FIG. 4 illustrates an example of an apparatus; and
FIG. 5 illustrates an example of a non-transitory computer-readable storage medium.

### DETAILED DESCRIPTION

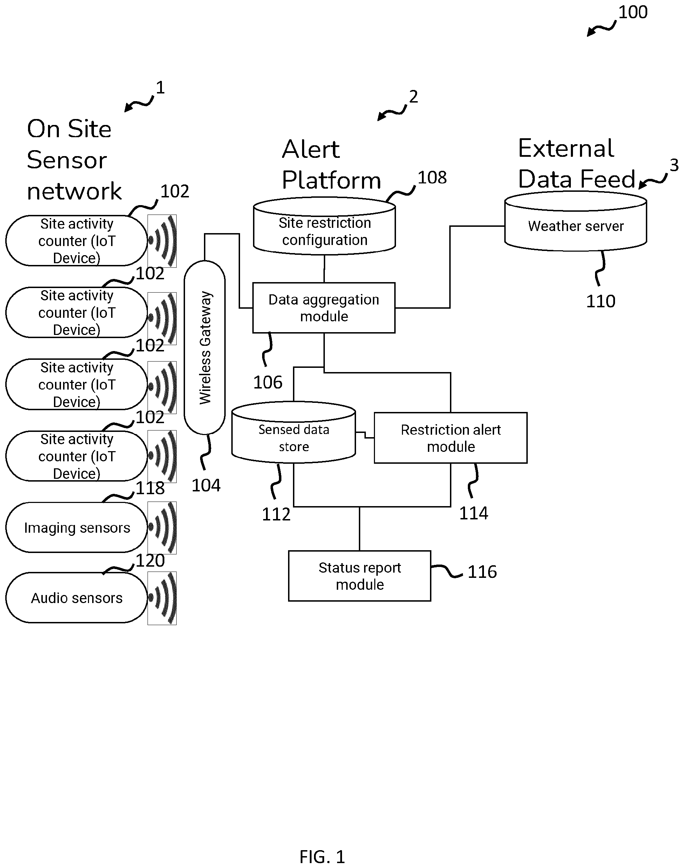

FIG. 1 illustrates a non-limiting example of a system 100 for a construction site. The system 100 comprises an on-site sensor network 1 for obtaining construction site activity information. The system 100 further comprises an external data feed 3 for obtaining environmental condition information. The system 100 further comprises an alert platform 2 for outputting alerts based on the construction site activity information and the environmental condition information.

Specifically, the alert platform 2 is configured to output an alert when a site restriction alerting condition is satisfied, in dependence on the construction site activity information and the environmental condition information. If a particular type of construction site activity is taking place despite being prohibited or restricted in particular environmental conditions, the alert will be output.

First, the on-site activity sensor network is described.

The on-site sensor network 1 comprises a network of distributed on-site activity sensors 102, and may comprise further sensors such as imaging sensors 118 and/or audio sensors 120.

The on-site activity sensors 102, of a type described below, are for enabling automatic determination of different types of activity on a construction site. The imaging sensors 118, such as video cameras, are for recording construction site activity. The audio sensors 120, such as microphones, are for recording construction site activity.

The on-site activity sensors 102 are described first. The on-site activity sensors 102 in the present example comprise wireless radio frequency (RF) signal receivers and circuitry, collectively configured to operate as Wi-Fi(TM) counters and/or as Bluetooth(TM) counters. The receivers may comprise any appropriate GHz-sensitive antennas connected to receiving circuitry. The receivers may be configured to operate within at least part of the 2.4GHz-5GHz range. The on-site activity sensors 102 are configured to count the number of mobile equipment (ME) devices in their vicinities via any appropriate counting algorithm.

On-site activity sensors 102 are generally referred to as people counters, based on the assumption that most people carry ME devices (mobile phones, smartphones, laptop computers, tablet computers, etc) comprising a wireless local area networking (WLAN) transmitter to enable Wi-Fi wireless communication. It can also be assumed that most ME devices comprise a wireless personal area network (WPAN) transmitter to enable Bluetooth wireless communication. Therefore, each ME device is a wireless communication probe that can be detected by an on-site activity sensor 102.

ME devices with Wi-Fi capability are configured to emit Wi-Fi management frames as wireless broadcast signals on a regular or periodic basis. The management frames are as defined in IEEE 802.11. The on-site activity sensors 102 can passively detect the emitted management frames, because they are broadcasted by ME devices without requiring establishment of two-way communication between the on-site activity sensor 102 and the ME devices.

Wi-Fi management frames carry the media access control address (MAC address) of the originating ME device. Therefore, an on-site activity sensor 102 can count the number of unique ME devices in proximity to the on-site activity sensor 102 via the unique MAC address contained in each Wi-Fi management frame.

ME devices with Bluetooth capability are configured to emit beacon signals as wireless broadcast signals on a regular, periodic, or continuous basis. The beacon signals are as defined in Bluetooth standards. The on-site activity sensors 102 can passively detect the emitted beacon signals, because they are broadcasted by ME devices without requiring establishment of two-way communication between the on-site activity sensor 102 and the ME devices.

Bluetooth beacon signals carry a unique identifier specific to the originating ME device. Therefore, an on-site activity sensor 102 can count the number of unique ME devices in proximity to the on-site activity sensor 102 via the unique identifiers contained in each Bluetooth beacon signal.

The ME devices do not even have to be in-use by their users at the time that the signals are transmitted. The above-described signals are transmitted even when ME devices are in an idle mode. Although many ME devices use MAC hopping and other techniques to avoid surveillance, this is not detrimental because no identification is required in order to implement the present invention. In particular, the mere detection of one (or more) ME devices present in an area (zone) may be sufficient.

A further benefit of the above type of on-site activity sensors 102, compared to cameras, is that there is no requirement for a line of sight or area illumination, due to the manner in which radio signals propagate. In addition, the on-site activity sensors 102 are more discreet than cameras, and are therefore less intrusive.

Each on-site activity sensor 102 can count the number of unique ME devices in its proximity, based on the number of unique ME device identifiers contained within the locally emitted broadcast signals within a cell of the on-site activity sensor 102. A cell may be defined as a signal detection range.

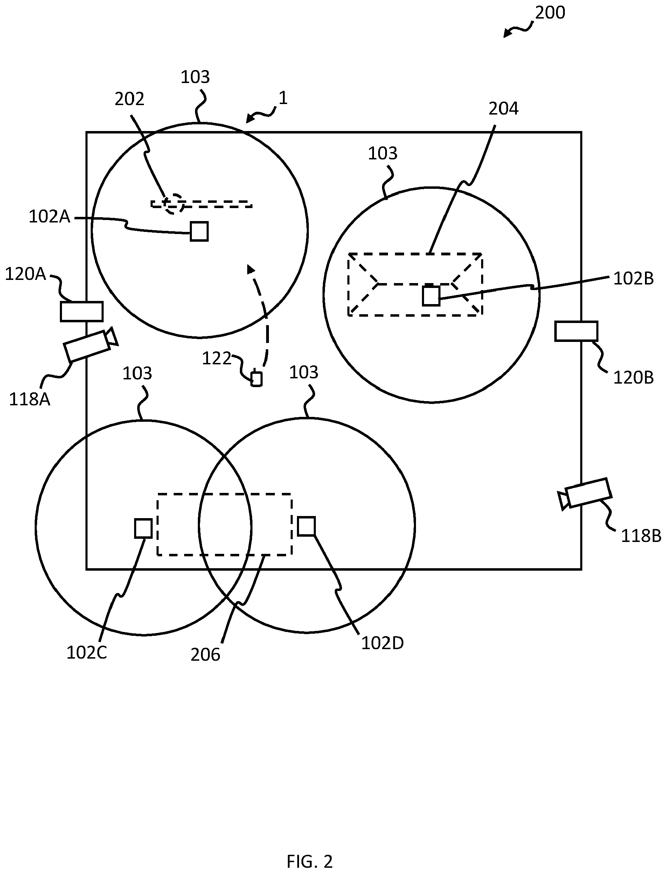

The on-site activity sensors 102 can be deployed around a construction site 200 as shown in FIG. 2. Each on-site activity sensor 102 is positioned to detect a particular type of construction site activity. That is, by positioning each on-site activity sensor 102 close to a particular type of construction equipment or area (zone) of the construction site 200, it is possible to automatically infer that a particular type of construction site activity is taking place just by detecting the presence of an ME device 122 within the cell 103 of the on-site activity sensor 102.

Each on-site activity sensor 102 has a cell size (signal detection range) from the order of tens of metres (WPAN) to hundreds of metres (WLAN). Each on-site activity sensor 102 may have both WLAN and WPAN detection capabilities. Cell size may be changed by modifying receiver power and/or by switching between WLAN and WPAN detection schemes.

Cell size can be modified by changing the design or configuration of the antenna and/or its enclosure.

Cell shape can be modified by configuring one or more of the on-site activity sensors 102 to provide a directional receiving pattern. On-site activity sensors 102 with directional receiving patterns can be placed and oriented to direct their receiving patterns towards individual items of construction equipment or areas of the construction site 200. This enables minimisation of cell overlap and ensures that only activity taking place in a limited area of interest will result in a detection.

In one example, an on-site activity sensor 102 comprises a directional receiver such as an array antenna, horn antenna, parabolic antenna, or the like.

Additionally, or alternatively, the on-site activity sensor 102 comprises a directional enclosure utilising electromagnetic shielding having conductive/magnetic properties (e.g., metal), and an RF-transparent window. The shielding may screen out signals from directions other than through the RF-transparent window.

A skilled person would understand that the angular width of a directional receiving pattern is defined as the range of directions from which a reference transmitted signal can be received with the received power greater than a suitable threshold such as -70dBm.

The angular width of the directional receiving pattern may be less than 180 degrees in a horizontal axis. In a specific example, the angular width may be no greater than 90 degrees. The angular width may be an acute angle, for example no greater than 60 degrees. Similar values may apply to the angular height of the directional receiving pattern.

In some implementations, the directional receiving patterns of individual ones of the on-site activity sensors 102 have different angular widths and/or angular heights.

If a directional on-site activity sensor 102 is used, the cell size can be controlled via the angle and/or height of mounting of the on-site activity sensor 102. The positioning (e.g., height and droop angle) of the on-site activity sensor 102 on its shape affects the shape and size of the area projected onto the ground, for which the on-site activity sensor is sensitive.

FIG. 2 schematically illustrates the cell 103 of each on-site activity sensor 102 as a circle. It would be appreciated that in reality, the cell 103 may have a different shape due to the directionality of reception, and also due to the varying effect of terrain, line of sight, and reflections, on the signal detection range.

As shown in FIG. 1, the on-site activity sensors 102 around the construction site 200 may be wirelessly connected to the alert platform 2 via a wireless gateway 104 shown in FIG. 1. Each on-site activity sensor 102 can comprise a wireless transmitter or a transceiver, for communicating with the alert platform 2. Each on-site activity sensor 102 may be a portable sensor device, having its own on-board electrical energy source such as a battery. Each on-site activity sensor 102 may be a hand-portable sensor device. Therefore, the on-site activity sensors 102 can easily be deployed and redeployed.

The on-site activity sensors 102 may be part of the Internet of Things forming part of a larger, distributed network. The processing of data, whether local or remote, may be for the purpose of construction site safety monitoring or other construction site purposes.

In another implementation, the on-site activity sensors 102 are connected to the alert platform 2 via a wired connection. Similarly, the imaging sensors 118 and/or audio sensors 120 may either be wireless (as shown) or wired.

FIG. 2 illustrates an example implementation of a construction site 200. FIG. 2 shows a first on-site activity sensor 102A located in a proximity of a construction crane 202. The construction crane 202 is within a cell 103 of the first on-site activity sensor 102A. The first on-site activity sensor 102A is positioned to detect occupancy of the construction crane 202. Therefore, if an ME device 122 is within a cab of the construction crane 202 then it will be in-range of the first on-site activity sensor 102A. In some examples, the first on-site activity sensor 102A can be mounted to the construction crane 202.

In FIG. 2, a second on-site activity sensor 102B is located in a proximity of an elevated work area 204 where workers need to work from height. The elevated work area 204 may comprise a slope, an upper scaffolding level, an upper building level, or may be at ground level adjacent a hole. The elevated work area 204 is within a cell 103 of the second on-site activity sensor 102B. The second on-site activity sensor 102B is positioned to detect occupancy of the elevated work area 204. For example, the second on-site activity sensor 102B may be elevated above ground level. The second on-site activity sensor 102B may be located at an upper floor, top floor, or roof of a structure. Therefore, if an ME device 122 is brought to the elevated work area 204 then it will be in-range of the second on-site activity sensor 102B.

Buildings with concrete or similarly dense floors tend to exhibit good RF isolation between floors, enabling separate on-site activity sensors 102B on individual floors to accurately determine at which floor activity is being detected.

As shown in FIG. 2, the cell 103 of the second on-site activity sensor 102B does not overlap the cell 103 of the first on-site activity sensor 102A. This ensures that the type of construction site activity associated with on-site activity sensor 102A, 102B is mutually exclusive. That is, the second on-site activity sensor 102B will not falsely detect use of a construction crane 202 when the actual activity comprises working at height, and the first on-site activity sensor 102A will not falsely detect working at height when the actual activity comprises working in or near a construction crane 202.

However, in case the cells 103 of the first and second on-site activity sensors 102A, 102B overlap, the system 100 can comprise a range detection means to determine whether the ME device 122 is closer to the first or second on-site activity sensor 102A, 102B. This prevents false positive detection of the type of construction site activity. The range detection means can comprise any appropriate range detector circuitry in any part of the system 100 of FIG. 1, for determining the relative received signal strength (e.g., RSSI) of the same signal as measured at each of the on-site activity sensors 102. The range detector can associate the ME device 122 with whichever one of the first and second on-site activity sensors 102A, 102B detected the highest received signal strength.

In FIG. 2, third and fourth on-site activity sensors 102C, 102D are located proximally to a concrete pour area 206 where concrete is to be poured and then allowed to set. In the illustrated examples, two on-site activity sensors 102C, 102D are deployed adjacent the concrete pour area 206 because the concrete pour area 206 is large. It would of course be appreciated that any number of on-site activity sensors 102 can be employed as appropriate to the specific type of construction site activity.

Each on-site activity sensor 102 may capture any one or more of the following data types: an identifier of each detected ME device 122 (e.g., MAC address); a timestamp indicating a time of detection of the ME device 122; or a received signal strength of the detected ME device 122.

A count of the number of unique ME devices 122 simultaneously in the cell 103 of each on-site activity sensor 102 can be determined either locally at the on-site activity sensor 102, and the count can be transmitted to the alert platform 2 for determining whether to output an alert. Alternatively, the count may be determined at the alert platform 2. The data identifying the ME device 122 may be anonymised if required for security. In general, ME devices 122 are good at anonymising themselves by MAC hopping and other techniques. The on-site activity sensors 102 may not store any other data about the ME devices 122, and their MAC addresses may not be stored outside the counting algorithm. Therefore, no identification takes place.

FIG. 2 illustrates imaging sensors 118A, 118B at the construction site 200. A first imaging sensor 118A is located in the construction site 200, and has the construction crane 202 and the elevated work area 204 in its field of view. A second imaging sensor 118B is located in the construction site 200, and has the concrete pour area 206 in its field of view. The imaging sensors 118A, 118B may capture images in a video format or a still image format, and transmit the images to the alert platform 2.

FIG. 2 also illustrates audio sensors 120A, 120B. A first audio sensor 120A is located in the construction site 200 in proximity to the construction crane 202. The second audio sensor 120B is located in the construction site 200 proximal to the elevated work area 204. The audio sensors 120A, 120B may capture audio signals in any appropriate audio format and transmit the audio signals to the alert platform 2.

An optional reason for capturing and recording images and/or audio is to collect evidence for later review. Therefore, when the alert platform 2 has output an alert, the images and/or audio signals from around the same time as the alert can be retrieved from non-volatile memory and reviewed.

According to some, but not necessarily all aspects of the disclosure, the radio signal-based on-site activity sensors 102 may be omitted, and instead other sensors such as the imaging sensors 118 may be deployed as on-site activity sensors 102. In further examples of the disclosure, activity detection may rely upon a combination of different sensing modalities (102, 118).

The alert platform 2 of FIG. 1 is now described in more detail. FIG. 1 provides just one example of several different topologies in which the alert platform 2 may be implemented.

The alert platform 2 can either be remote to the construction site 200 or local to the construction site 200. In a remote implementation, the alert platform 2 can be a remote platform implemented in cloud-computing infrastructure. The alert platform 2 can be accessed by an appropriately-authenticated device with an internet connection, from any appropriate local or remote location.

The alert platform 2 comprises a data aggregation module 106, a restriction alert module 114, a status report module 116, and various data stores (memory devices) including a site restriction configuration 108 and a sensed data store 112.

The data aggregation module 106 is configured to obtain construction site activity information from the on-site sensor network 1 via the wireless gateway 104.

The data aggregation module 106 is further configured to obtain information from the external data feed 3. This external data feed 3 provides environmental condition information such as weather information, originating from a location-based environmental condition server 110 such as a weather server. The alert platform 2 may be configured to pull local environmental condition information from the environmental condition server 110 using location data such as coordinates corresponding to the location of the construction site 200. In other implementations, on-site sensor network 1 at the construction site 200 comprises local one or more environmental condition sensors such as rain gauges, anemometry, temperature sensors, humidity sensors, pollen sensors, or ultraviolet radiation sensors, with which the alert platform 2 is configured to communicate.

The environmental condition information may comprise weather information indicative of at least one of: a rain condition; a wind condition; a snow condition; an ice condition; or a temperature condition.

Humidity information, rain presence information, rain intensity information, and rain depth information, are examples of weather information indicative of a rain condition.

Steady windspeed information and wind gust information are examples of weather information indicative of a wind condition. Such information may indicate ground-level winds, or for skyscrapers/high-elevations may indicate windspeed above ground-level.

Snow presence information, snow intensity information, and snow depth information are examples of weather information indicative of a snow condition.

Ice presence information or ice probability information (based on temperature and precipitation) are examples of weather information indicative of an ice condition.

Temperature information (Celsius or Fahrenheit) is an example of weather information indicative of a temperature condition.

Additionally, or alternatively, other types of environmental condition information can be collected such as pollen count information.

The environmental condition information may indicate current environmental condition information. In some examples, the environmental condition information may indicate forecast environmental condition information. In some examples, the alert platform 2 uses forecast environmental condition information when determining whether to provide an early warning, and current environmental condition information when determining whether to provide an alert.

The data aggregation module 106 is further configured to access the site restriction configuration 108 to determine one or more active site restriction alerting conditions. Each site restriction alerting condition associates an environmental condition-dependent maximum count of individuals with a particular type of construction site activity (e.g., area of the construction site 200).

The site restriction configuration 108 may also comprise a data structure associating the individual on-site activity sensors 102 with different types of construction site activity. For example, the site restriction configuration 108 may comprise a database associating the identifiers (physical addresses or network addresses) of the on-site activity sensors 102 with different parts of the construction site 200 each associated with different types of construction site activity.

If the construction site 200 is as shown in FIG. 2, the database may associate: the first on-site activity sensor 102A with activity in or around the construction crane 202; the second on-site activity sensor 102B with activity in the elevated work area 204 (working at height); and the third and fourth on-site activity sensors 102C, 102D with activity in or around the concrete pour area 206. Further, the database may associate some of the on-site activity sensors 102 with outdoor working and others with indoor working, if some on-site activity sensors 102 are in a sheltered environment (indoors).

Depending on the level of accuracy of the on-site sensor network 1, the alert platform 2 may or may not detect that particular types of construction work are actually taking place. However, the alert platform 2 can at least determine via the sensors 102 that individuals are located in parts of the construction site 200 associated with particular types of construction site activity.

If more accuracy is desired, images may enable the detection of specific types of construction work taking place. This can be achieved via machine vision, for example.

In some examples, the site restriction configuration 108 can be modified. Any appropriate user interface can be provided. Examples in which the site restriction configuration 108 can be modified by an authenticated user include but are not limited to one or more of the following: activating individual site restriction alerting conditions; deactivating individual site restriction alerting conditions; modifying individual site restriction alerting conditions; adding associations in the database; modifying the associations in the database.

The restriction alert module 114 is connected to the data aggregation module 106. The restriction alert module 114 is configured to enforce the one or more active site restriction alerting conditions in dependence on the construction site activity information from the on-site sensor network 1.

The outputs of the restriction alert module 114 and of the data aggregation module 106 are connected to the sensed data store 112. The sensed data store 112 may be configured to store in non-volatile memory timestamped information including any one or more of: construction site activity information; environmental condition information; a record of alerts output by the restriction alert module 114.

In some examples, the alert platform 2 does not store or process video data from the imaging sensors 118; or audio signals from the audio sensors 120. This means that no private information is collected by the alert platform 2. The alert platform 2 may be operable to store timestamped alert flags in memory. Therefore, if a site supervisor collects video/audio data with another service, they can use the timestamps of the alerts to look up video/audio data at the times corresponding to the timestamps. In other implementations, the alert platform 2 may store the video/audio data.

The status report module 116 is connected to the sensed data store 112 and to the restriction alert module 114. The status report module 116 may be configured, via any appropriate user interface, to enable a lookup of the timestamped information for review. In some examples, the status report module 116 may be configured to enable user selection of a past alert, and look up timestamped information from the sensed data store 112 based on the timestamp of the selected alert.

The user interface may comprise various features outside the scope of this disclosure, such as graphic visualisations of people count over time, and/or map visualisations of where alerts were triggered, and/or project management tools.

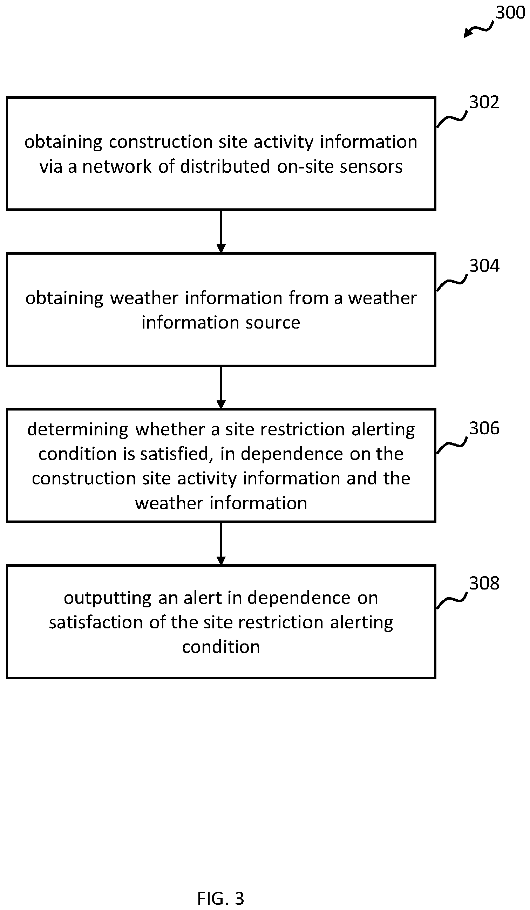

FIG. 3 is a flowchart implementing a method 300 for implementing one or more aspects of the disclosure. The method 300 may be executed by the alert platform 2. The method 300 may be executed automatically, without user intervention. The method 300 may be executed in real-time, repeating on a substantially continuous basis. Therefore, the information received is real-time (e.g., from milliseconds to seconds) and alerts can be output with minimal delay.

The method 300 comprises, at block 302, obtaining the construction site activity information from the on-site sensor network 1.

This can comprise the alert platform 2 (e.g., the data aggregation module 106 of FIG. 1) receiving construction site activity information from the on-site activity sensors 102. In an implementation, the data aggregation module 106 receives a count from each on-site activity sensor 102, each count indicating a number of individuals (ME devices 122) detected by each on-site activity sensor 102.

Block 302 of the method 300 can comprise the alert platform 2 determining the types of construction site activity taking place by determining which on-site activity sensors 102 have detected the presence of ME devices 122 in their cells 103. For example, ME devices 122 in the cells 103 of the first and second on-site activity sensors 102A, 102B enable the alert platform 2 to determine the following types of construction site activity: activity in or around the construction crane; and working at height.

At the next block 304, the method 300 of FIG. 3 comprises obtaining environmental condition information from an environmental condition information source. Note that blocks 302 and 304 can be performed in any order.

Block 304 can comprise the alert platform 2 (e.g., the data aggregation module 106 of FIG. 1) receiving the local environmental condition information from the environmental condition server 110 and/or from the local environmental condition sensors. The environmental condition information may indicate at least the current local weather condition in the vicinity of the construction site 200.

At the next block 306, the method 300 of FIG. 3 comprises determining whether a site restriction alerting condition is satisfied, in dependence on the construction site activity information and the environmental condition information.

This can comprise the restriction alert module 114 simultaneously monitoring whichever ones of a plurality of site restriction alerting conditions are active. If any one of the plurality of site restriction alerting conditions are satisfied, an alert is output. Alternatively, in a simpler implementation, there can be just one site restriction alerting condition.

In an implementation, determining whether at least one of the site restriction alerting conditions is satisfied comprises determining the counts for each on-site activity sensor 102, and comparing the counts with the environmental condition-dependent maximum counts (allowable counts) pre-assigned to each on-site activity sensor 102 (each sensor representing a particular type of construction site activity, i.e., area of the construction site 200). The environmental condition-dependent maximum counts for each on-site activity sensor 102 depend on the types of adverse environmental conditions.

In order to justify an alert, the environmental condition should be an adverse environmental condition rather than a mild environmental condition. Determining whether an environmental condition from the weather information is an adverse environmental condition can comprise setting any appropriate adverse environmental condition thresholds for monitoring by the alert platform 2. The thresholds can include, for example:
- a rain condition threshold such as: maximum humidity; whether it is raining; rain intensity; rain depth.
- a wind condition threshold such as: maximum steady windspeed; maximum gust intensity (e.g., speed).
- a snow condition threshold such as: whether it is snowing; maximum snow intensity; maximum snow depth.
- an ice condition threshold such as: whether ice is present; maximum ice probability.
- a temperature threshold(s) such as: allowable temperature range; maximum temperature; minimum temperature;

Instead of thresholds, an adverse environmental condition may be determined via environmental condition warnings. For example, the environmental condition server 110 may indicate a local weather warning, such as a storm warning.

A maximum count of zero means that just one individual ME device 122 is sufficient to trigger an alert. For example, it may be a requirement for nobody to be stationed on the roof of a building in windy or icy conditions.

Using FIG. 2 and heavy winds as an example, the maximum count can be zero for the first and second on-site activity sensors 102A, 102B. This ensures that individuals avoid the construction crane 202 and also avoid working from heights. The maximum count for the third and fourth on-site activity sensors 102C, 102D may be unlimited, for example if the concrete pour area 206 is sheltered from the wind.

For some on-site activity sensors 102, the alert platform 2 may allow unlimited counts for certain adverse environmental conditions but may enforce maximum counts for other adverse environmental conditions for the same on-site activity sensors 102. For example, the third and fourth on-site activity sensors 102C, 102D may enable unlimited counts in windy conditions but may enforce maximum counts for above-threshold rain conditions.

In some examples, more than one threshold must be exceeded to enforce a maximum count, such as a combination of wind and low temperatures.

In some implementations, a minimum count may be enforced for certain environmental conditions and types of construction site activity, to ensure that lone working is prohibited.

In order to prevent excessive alerts, the alert platform 2 may allow a maximum dwell time of the ME device 122 in the order of seconds or minutes, to allow necessary transit through restricted parts of the construction site 200. The maximum dwell time, if any, may be a user-configurable setting of the site restriction configuration 108. If the count stays above the maximum count for longer than the maximum dwell time, an alert is output.

Additionally, or alternatively, the adverse environmental condition thresholds can be raised (as user-configurable settings) to prevent excessive alerts.

Additionally, or alternatively, the cell size may be a user-configurable setting of the alert platform 2 to ensure that the cell 103 of each on-site activity sensor 102 does not encroach on non-restricted parts of the construction site 200.

At the next block 308, the method 300 of FIG. 3 comprises outputting an alert in dependence on satisfaction of the site restriction alerting condition. No alert is output if none of the site restriction alerting condition(s) is/are satisfied.

If an alert is output, an authorised party such as a site supervisor will be automatically notified of non-compliance with environmental condition-related construction site processes and can take action.

Outputting the alert can comprise rendering the alert on one or more output devices such as a display, a haptic device, and/or an audio speaker. Such output devices may be associated with authorised users such as an on-site or remote construction site supervisor.

Additionally, or alternatively, outputting the alert can comprise sending (e.g., pushing) an alert notification, addressed to a destination address (e.g., network address), to a communication interface for forwarding to the destination address via a communication network. The communication network may comprise a telecommunications network, for example. The alert notification may comprise a short message service (SMS) notification, an app notification, or any other appropriate type of notification. The destination address may be that of the supervisor or any other appropriate party.

In some examples, the alert platform 2 is not configured to communicate directly with the counted ME devices 122. Their network addresses (e.g., phone numbers or IP addresses) may not be known to the alert platform 2. The ME devices 122 may not be registered to the alert platform 2. Although the alert platform 2 could be configured to require worker registration and therefore to push alerts to their ME devices 122, there are advantages to not doing so as explained below.

A first advantage of alerting site supervisors without directly notifying the worker(s) responsible for the alert is that registration of worker ME devices 122 is not required. This is particularly useful in construction sites due to the large number of workers from different companies and contractors, which would cause administrative delays in registering all workers.

A second advantage of alerting site supervisors without notifying workers is that workers do not have to be made aware of the existence of the system 100. Therefore, deliberate circumvention of policies (e.g., wilfully deactivating WLAN/WPAN on their ME devices 122) is less likely to be a problem.

In some examples, the timestamp of the alert is recorded in the sensed data store 112. The status report module 116 with an appropriate user interface as described above may enable a lookup of images and/or audio signals recorded at the time of the alert. This enables supervisors to identify the causes of breaches of environmental condition-based policies.
In some examples, the alert platform 2 is configured to automatically (without user intervention) repeat the alert while the alerting condition is satisfied. The alert platform 2 may comprise a configurable alert repetition time period, to repeat the alert (operation 308) according to the alert repetition time period while the alerting condition remains continuously satisfied. Each repeat is based on the original satisfaction of the alerting condition.

The alert repetition time period may be longer than the 'real-time' sampling frequency, for example in the order of tens of seconds to minutes to hours. The alert repetition time period may be user-configurable.

In some examples, the alert platform 2 is configured to automatically output an end-of-alert signal to indicate when the alerting condition is no longer satisfied. This provides explicit reassurance that further intervention may not be needed. In an implementation, the alert platform 2 may be configured to output the end-of-alert signal in dependence on expiry of an incident period. The incident period may be a predetermined time period which resets in dependence on the alerting condition being satisfied. The incident period may expire when there have been no alerts throughout its duration. The duration of the incident period may be in the order of one or more minutes to hours. The duration may be user-configurable.

In some examples, the alert platform 2 is configured to output an offline-sensor alert in dependence on a determination that an on-site activity sensor 102 is offline. This could be the result of deactivation of the sensor itself or the wireless gateway 104. The offline determination could be in dependence on the alert platform 2 not receiving a periodic report from the on-site activity sensor 102, by a required reporting interval. The on-site activity sensors 102 may collectively be configured to send a periodic report at the required reporting interval, to enable the alert platform 2 to detect when a sensor has become offline.

If the on-site activity sensors 102 are portable, they may indicate the states of charge of their onboard energy sources (e.g., batteries) via the periodic reports, or separate conditional reports (e.g., low battery warnings).

Several example use cases are described below. Each use case is optional, and they illustrate only some of the many possible ways in which the alert platform 2 may be used.

### 1) Wind and cranes working restrictions:

On any site where construction crane 202s are active, there will be restrictions on construction crane activity based on construction crane characteristics such as the crane type and crane height. Crane types include mobile cranes (extending, fixed-length); and fixed cranes (fixed-length, extending). Crane height may be either fixed or variable.

Configuration of the maximum threshold would be such that in the initial case the crane height and threshold wind conditions are recorded as reference data in the site restriction configuration 108. For example, different threshold wind conditions may be set for different crane types and/or crane heights.

In some examples, the site restriction configuration 108 may have predetermined maximum counts for each one of a plurality of crane types and/or crane heights.

During operation, if the crane height is measured for a particular construction crane (manually, via sensing, or via lookup from project management software), and the threshold wind condition for that crane height is exceeded, and activity is recorded by the on-site activity sensor 102 on/near the construction crane, then the combination of these factors will trigger one or more alert mechanisms that will be issued to the appropriate parties.

### 2) Ice and working restrictions:

Ice is a particular slip hazard on any smooth surface. The presence of ice on sheet steel or other forms of steel, typically on a roof or other surface, is such a hazard.

Configuration of a threshold setting would be such that if ice is forecast for the site (indicating forecast above-threshold ice conditions), the alert platform 2 may output an advance warning (as opposed to an alert). The alert platform 2 may then output an alert in the event that above-threshold ice conditions are indeed present in certain locations, and activity is detected at these locations and should be prohibited for safety reasons.

### 3) Concrete pouring weather restrictions:

For concrete to set in the timeframe and to the degree required by engineering specifications, a specific temperature and humidity parameter window is optimal. Pouring cement outside these parameters in sub optimal and in some cases should be suspended until conditions improve as the concrete cannot be finished properly in the required timeframe if it is poured outside of this window.

Configuration of a maximum count relating to the activity of concrete pouring outside the ideal temperature/humidity window as recorded by the weather information would trigger the output of one or more alerts to the appropriate parties.

### 4) General weather/working restrictions:

In many locations, high outdoor temperatures during the day can preclude the ability to do certain types of work as they will result in dehydration/heat stress or in the case of low outdoor temperatures, may lead to accident and injury owing to cold stress, ice falls etc.

Configuration of a threshold setting relating to temperature lower and upper limits on-site, specifically for outdoor working (as detected by outdoor on-site activity sensors 102) would trigger the output of one or more alerts to the appropriate parties.

For similar reasons, a threshold setting relating to ultraviolet radiation upper limits can be set, specifically for outdoor working, to limit the risk of sunburn. 5) Working on different floors of a building.

The floors of some buildings are constructed before their walls are erected. Different floor levels may encounter different wind speeds, and the safety tolerance to high winds may differ between floors depending on their heights and levels of fall protection. Therefore, on-site activity sensors at different floors may have different thresholds such as different wind condition thresholds/ice condition thresholds, etc.

### 6) Non-weather-related alerts

According to some, but not necessarily all examples of the disclosure, the alert platform 2 may further enable non-weather-related alerts. This can be regarded as an extra feature or as a separately patentable feature. Examples of non-weather-related alerts are provided below.
- Different types of environmental conditions may be monitored, such as pollen counts (pollen intensity). Pollen count is dependent on the weather, the season, and the amount and type of vegetation around the site.
- In the case of temporary buildings used for construction, such as crew dining rooms and changing rooms, there is generally a limit on how many people may be safely accommodated at any one time. A breach of this limit could be an alerting event.
- A large number of people around a vehicle ingress/egress area (e.g., gate) where vehicles are entering / exiting could be a safety hazard whereas one or two people might be acceptable.
- In terms of site security, it might be the case that after a certain hour, only a specific number of people (e.g., two security personnel) should be present and any more is an alert condition.

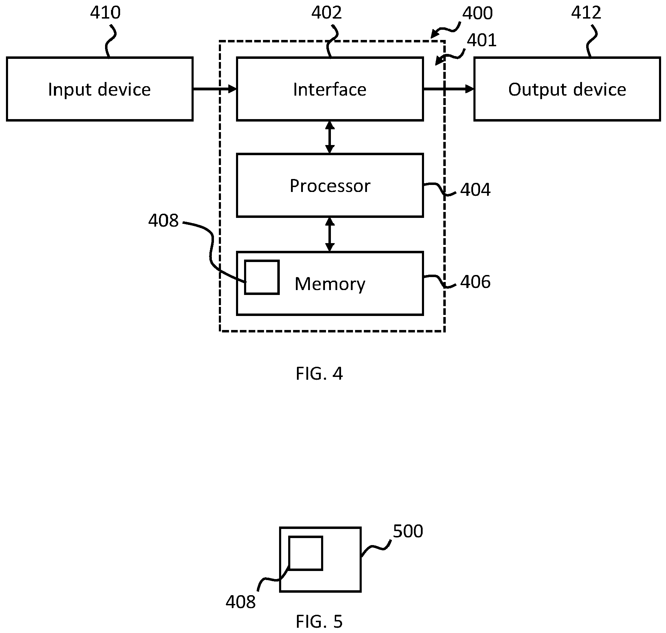

FIG. 4 illustrates an example of an apparatus 400 for implementing the method 300. The apparatus 400 may implement some or all of the alert platform 2. The apparatus 400 comprises at least one controller 401. Implementation of a controller 401 may be as controller circuitry. The controller 401 may be implemented in hardware alone, have certain aspects in software including firmware alone or can be a combination of hardware and software (including firmware).

As illustrated in FIG. 4 the controller 401 may be implemented using instructions that enable hardware functionality, for example, by using executable instructions of a computer program 408 in a general-purpose or special-purpose processor 404 that may be stored on a computer readable storage medium (disk, memory etc) to be executed by such a processor 404.

The processor 404 is configured to read from and write to the memory 406. The processor 404 may also comprise an output interface via which data and/or commands are output by the processor 404 and an input interface via which data and/or commands are input to the processor 404.

The memory 406 stores a computer program 408 comprising computer program instructions (computer program code) that controls the operation of the apparatus 400 when loaded into the processor 404. The computer program instructions, of the computer program 408, provide the logic and routines that enables the apparatus to perform the methods illustrated in FIG.s 1 and 3. The processor 404 by reading the memory 406 is able to load and execute the computer program 408.

The apparatus 400 therefore comprises:
at least one processor 404; and
at least one memory 406 including computer program code
the at least one memory 406 and the computer program code configured to, with the at least one processor 404, cause the apparatus 400 at least to perform:
   obtaining construction site activity information via a network of distributed on-site activity sensors 102;
   obtaining environmental condition information from an environmental condition information source;
   determining whether a site restriction alerting condition is satisfied, in dependence on the construction site activity information and on an environmental condition an indicated by the environmental condition information; and
   outputting an alert in dependence on satisfaction of the site restriction alerting condition.

As shown in FIG. 4, the apparatus 400 can further comprise an interface 402 to receive information from an input device 410, such as the wireless gateway 104 and/or a user input device such as a mouse/keyboard. The interface 402 can further transmit information, such as alerts, to an output device 412 such as a display. The input device 410 and the output device 412 may enable access to the above-described user functions of the alert platform 2.

As illustrated in FIG. 5, the computer program 408 may arrive at the apparatus 400 via any suitable delivery mechanism 500. The delivery mechanism 500 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 408. The delivery mechanism may be a signal configured to reliably transfer the computer program 408. The apparatus 400 may propagate or transmit the computer program 408 as a computer data signal.

Computer program instructions for causing an apparatus to perform at least the following or for performing at least the following:
cause obtaining construction site activity information via a network of distributed on-site activity sensors 102;
cause obtaining environmental condition information from an environmental condition information source;
cause determining whether a site restriction alerting condition is satisfied, in dependence on the construction site activity information and on an environmental condition an indicated by the environmental condition information; and
cause outputting an alert in dependence on satisfaction of the site restriction alerting condition.

The computer program instructions may be comprised in a computer program, a non-transitory computer readable medium, a computer program product, a machine readable medium. In some but not necessarily all examples, the computer program instructions may be distributed over more than one computer program.

Although the memory 406 is illustrated as a single component/circuitry it may be implemented as one or more separate components/circuitry some or all of which may be integrated/removable and/or may provide permanent/semi-permanent/ dynamic/cached storage.

Although the processor 404 is illustrated as a single component/circuitry it may be implemented as one or more separate components/circuitry some or all of which may be integrated/removable. The processor 404 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The blocks illustrated in the FIG.s 1 and 3 may represent steps in a method and/or sections of code in the computer program 408. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

The recording of construction site activity information via the type of on-site activity sensors 102 described herein may be patentable of its own right, without any form of alert. The type of sensors and their deployment may be novel in this context. The system 100 enables the accurate sensing of construction site activity based on the zonal detection of the number of ME devices 122 transmitting in the cell of each on-site activity sensor 102. The recording of the resulting activity data (number of occupants in each zone, at what times) enables safety and/or compliance to be monitored automatically and even remotely.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or `the' is used in this document with an inclusive not an exclusive meaning. That is any reference to X comprising a/the Y indicates that X may comprise only one Y or may comprise more than one Y unless the context clearly indicates the contrary. If it is intended to use 'a' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
obtaining construction site activity information via a network of distributed on-site activity sensors;
obtaining environmental condition information from an environmental condition information source;
determining whether a site restriction alerting condition is satisfied, in dependence on the construction site activity information and on an environmental condition an indicated by the environmental condition information; and
outputting an alert in dependence on satisfaction of the site restriction alerting condition.

2. The apparatus of claim 1, wherein the construction site activity information is based on a number of unique wireless communication probes detected to be in proximity to each on-site activity sensor, and wherein each on-site activity sensor is associated with a different construction site area.

3. The apparatus of claim 2, wherein detecting the number of unique wireless communication probes in proximity to each on-site activity sensor is based on sensing of unique wireless local area network (WLAN) signal emissions by each on-site activity sensor, and/or wherein detecting the number of unique wireless communication probes in proximity to each on-site activity sensor is based on sensing of unique wireless personal area network (WPAN) signal emissions by each on-site activity sensor.

4. The apparatus of claim 2 or 3, wherein at least one of the on-site activity sensors is configured to provide a directional receiving pattern.

5. The apparatus of any preceding claim, wherein obtaining the construction site activity information comprises looking up, from stored data, a type of construction site activity based on an identifier of a first one of the on-site activity sensors, wherein the stored data associates identifiers of the on-site activity sensors with different types of construction site activities, or wherein obtaining the construction site activity information comprises detecting a type of construction site activity via one or more image sensors.

6. The apparatus of any preceding claim, wherein the environmental condition information is indicative of at least one of: a rain condition; a wind condition; a snow condition; an ice condition; or a temperature condition.

7. The apparatus of any preceding claim, wherein the environmental condition information source comprises an environmental condition server, and wherein the environmental condition information indicates a local environmental condition an in a vicinity of the network of on-site activity sensors, or wherein the environmental condition information source comprises a local environmental condition sensor with which the apparatus is configured to communicate.

8. The apparatus of any preceding claim, wherein determining whether the site restriction alerting condition is satisfied comprises determining whether a number of individuals detected by a first on-site activity sensor of the network of on-site activity sensors exceeds a maximum count, wherein the maximum count depends on an identity of the first on-site activity sensor and on the environmental condition.

9. The apparatus of claim 8, comprising means for determining the maximum count based on a site restriction configuration, wherein the site restriction configuration is configured to enforce environmental condition-dependent maximum counts in dependence on one or more of the following adverse environmental condition conditions:
an above-threshold wind condition if the construction site activity information is associated with construction crane working and/or working at height and/or outdoor working;
an above-threshold rain condition if the construction site activity information is associated with concrete pouring and/or working at height and/or outdoor working;
an above-threshold ice condition if the construction site activity information is associated with working at height and/or outdoor working;
an above-threshold temperature condition if the construction site activity information is associated with outdoor working and/or concrete pouring; or
a below-threshold temperature condition if the construction site activity information is associated with outdoor working and/or concrete pouring.

10. The apparatus of any preceding claim, wherein determining whether the site restriction alerting condition is satisfied comprises determining whether a number of individuals detected by one of the on-site activity sensors is below a minimum count which depends on the on-site activity sensors and the environmental condition information.

11. The apparatus of any preceding claim, configured to output an end-of-alert signal to indicate when the site restriction alerting condition is no longer satisfied.

12. A construction site comprising the apparatus as claimed in any preceding claim, and the network of on-site activity sensors.

13. The construction site of claim 12, wherein the on-site activity sensors comprise one or more of the following:
an on-site activity sensor positioned to detect occupancy of a construction crane;
an on-site activity sensor positioned to detect occupancy within a concrete pour area;
an on-site activity sensor positioned to detect occupancy at an elevated work area; or
an on-site activity sensor positioned to detect occupancy at an outdoor work area.

14. A method comprising:
obtaining construction site activity information via a network of distributed on-site activity sensors;
obtaining environmental condition information from an environmental condition information source;
determining whether a site restriction alerting condition is satisfied, in dependence on the construction site activity information and on an environmental condition an indicated by the environmental condition information; and
outputting an alert in dependence on satisfaction of the site restriction alerting condition.

15. Computer software that, when executed by at least one processor, is configured to:
cause obtaining construction site activity information via a network of distributed on-site activity sensors;
cause obtaining environmental condition information from an environmental condition information source;
cause determining whether a site restriction alerting condition is satisfied, in dependence on the construction site activity information and on an environmental condition an indicated by the environmental condition information; and
cause outputting an alert in dependence on satisfaction of the site restriction alerting condition.
